# EUROPÄISCHE PATENTANMELDUNG

(11) **EP 2 072 318 A1**
(43) Veröffentlichungstag der Anmeldung: **24.06.2009**
(21) Anmeldenummer: 08105959.4
(22) Anmeldetag: 10.12.2008
(51) Int. Cl.: B60K 35/00

(54) **Anzeigeinstrument für ein Kraftfahrzeug**

(30) Priorität: 20.12.2007 DE 102007061733
(71) Anmelder: Robert Bosch GmbH, 70442 Stuttgart (DE)
(72) Erfinder: Leutwein, Andreas, 71394, Kernen (DE)

(57) **Zusammenfassung**

Die Erfindung betrifft eine Anzeigeinstrument (6, 8) für ein Fahrzeug, mit einer frei programmierbaren Anzeige (4), umfassend mindestens eine elektronisch auf der Anzeige (4) abgebildete Darstellung eines mechanischen oder körperlichen Elements (10, 14), wie eines Zeigers (14) oder Rahmens (10), sowie eine elektronisch auf der Anzeige (4) abgebildete Darstellung eines Schattens (18, 20) des mechanischen oder körperlichen Elements (10, 14) oder mindestens einer Lichtreflexion, wobei die Darstellung des Schattens (18, 20) veränderbar ist. Es sind Mittel zur Veränderung der Darstellung des Schattens (28, 20) oder der Lichtreflexion in Abhängigkeit von einem Lichteinfall auf das Fahrzeug vorgesehen.

## Beschreibung

Die Erfindung betrifft ein Anzeigeinstrument für ein Fahrzeug gemäß dem Oberbegriff des Anspruchs 1, sowie ein Kombinationsinstrument mit mehreren derartigen Anzeigeinstrumenten gemäß Anspruch 13.

### Stand der Technik

Anzeigeinstrumente auf Instrumententafeln von Kraftfahrzeugen dienen zur Darstellung von fahrerrelevanten Informationen, wie zum Beispiel der augenblicklichen Fahrtgeschwindigkeit, der Drehzahl des Antriebsmotors, des Füllstands eines Kraftstofftanks, der augenblicklichen Uhrzeit und dergleichen. Während diese Anzeigeinstrumente früher nahezu ausschließlich in Form von analogen Zeigerinstrumenten mit einem drehbaren Zeiger verbaut wurden, sind sie heute auch sämtlich in Form von elektronischen Anzeigeinstrumenten mit einer frei programmierbaren Anzeige verfügbar, d.h. einem Display, auf dem die relevanten Informationen in einer beliebigen gewünschten Art und Weise dargestellt bzw. dargeboten werden können. Häufig werden mehrere elektronische Anzeigeinstrumente zu einem Kombinationsinstrument mit einer einzigen frei programmierbaren Anzeige zusammengefasst, auf der diese Instrumente in einer beliebigen gewünschten Anordnung dargestellt werden können.

Jedoch hat sich gezeigt, dass die mitunter als Fahrtgeschwindigkeits- und Drehzahlanzeige weiterhin ein Zeigerinstrument bevorzugt wird. Dies ist neben einer besseren Anmutung ein weiterer Grund für die Verwendung elektronischer Anzeigeinstrumente der eingangs genannten Art, auf deren Anzeigeflächen konventionelle analoge Instrumente und insbesondere Zeigerinstrumente, wie Fahrtgeschwindigkeitsanzeige und Drehzahlanzeige nachgebildet werden, indem die bei analogen Anzeigeinstrumenten als reale dreidimensionale Körper ausgebildeten, über eine Anzeigefläche überstehenden mechanischen Elemente der Anzeige, wie Zeiger, Tuben, Rahmen oder Einfassungen, mit Hilfe von Software auf elektronischem Weg in Form einer simulierten dreidimensionalen Darstellung auf der Anzeige abgebildet werden. Um einer solchen Darstellung eine größere räumliche Tiefe zu verleihen, wird das simulierte mechanische Element nicht selten zusammen mit einem ebenfalls simulierten Schatten dargestellt, das heißt einer dunklen Fläche, deren Form in etwa der Form des Schattens entspricht, der von dem entsprechenden mechanischen Element eines entsprechenden konventionellen analogen Anzeigeinstruments auf eine umgebende Oberfläche geworfen wird. Dieser Schatten wird jedoch stets in einer festen räumlichen Beziehung zu der Darstellung des simulierten mechanischen Elements abgebildet, wobei er zum Beispiel bei einem Zeiger in der Regel als eine langgestreckte, an eine Seite des Zeigers angrenzende dunkle Fläche dargestellt wird.

Im Unterschied zu einem echten Schatten eines Zeigers oder eines anderen mechanischen Elements eines konventionellen analogen Anzeigeinstruments, der sich immer auf der zum Lichteinfall entgegengesetzten Seite des mechanischen Elements befindet und bei einer Veränderung der Helligkeit und/oder des Einfallswinkels des Lichts seine Intensität bzw. seine Form verändert oder bei beweglichen mechanischen Elementen, wie Zeigern, im Zuge einer Bewegung des Elements seine Lage in Bezug zu diesem verändert, sind elektronisch dargestellte Schatten jedoch bisher immer statisch, das heißt, sie reagieren nicht auf Veränderungen des Lichteinfalls.

Insbesondere bei starkem Sonnenlichteinfall kann dies zu irrealen Darstellungen führen, zum Beispiel wenn sich ein elektronisch erzeugter Schatten eines simulierten mechanischen Elements auf einer Seite der Darstellung dieses Elements befindet, während sich ein durch den Sonnenlichteinfall erzeugter Schatten eines benachbarten Bauteils auf der Instrumententafel des Fahrzeugs, wie zum Beispiele der Schatten von Teilen einer Hutze, auf der entgegengesetzten Seite des schattenwerfenden Bauteils befindet, oder wenn ein elektronisch erzeugter Schatten seine Form und Lage beibehält, während der durch den Sonnenlichteinfall erzeugte Schatten bedingt durch eine Fahrtrichtungsänderung des Kraftfahrzeugs über das Anzeigeinstrument wandert.

Weitere Unterschiede zwischen elektronisch erzeugten statischen Schatten und durch Sonnenlichteinfall erzeugten Schatten bestehen darin, dass bei den ersteren bisher auch die Helligkeit und die Länge des Schattenwurfs statisch ist, während sich bei den letzteren im Verlauf eines Tages zusammen mit dem Sonnenstand gewöhnlich sowohl die Intensität als auch die Ausrichtung des Schattens verändert. Durch diese Unterschiede leidet bei elektronischen Anzeigeinstrumenten die Realitätsnähe der Darstellung, was eine schlechtere Anmutung oder Wertigkeit des Anzeigeinstruments zur Folge hat.

Entsprechendes gilt auch für Lichtreflexionen, zum Beispiel für Lichtreflexionen von Elementen der Anzeige oder von umgebenden Bauteilen, die ebenfalls zur Verbesserung der Realitätsnähe der Darstellung auf der Anzeige abgebildet werden.

Aus der DE 2005 035 481 A1 ist bereits ein Anzeigeinstrument der eingangs genannten Art bekannt, bei dem die graphische Darstellung auf der Anzeige mit Hilfe einer durch den Fahrer bedienten Auswahleinrichtung zwischen mehreren verschiedenen Moden umschaltbar ist, wobei sich die beiden Moden unter anderem hinsichtlich des Schattenwurfs von Anzeigeelementen, wie Zeigern oder Ringen, voneinander unterscheiden können. Durch eine manuelle Umschaltung zwischen unterschiedlichen Darstellungen können jedoch die zuvor beschriebenen Probleme nicht beseitigt werden.

### Offenbarung der Erfindung

Ausgehend hiervon liegt der Erfindung die Aufgabe zugrunde, ein Anzeigeinstrument der eingangs genannten Art dahingehend zu verbessern, dass eine realistischere Darstellung des Schattenwurfs von simulierten mechanischen Elementen ermöglicht wird.

Diese Aufgabe wird erfindungsgemäß durch Mittel zur Veränderung der Darstellung des Schattenwurfs oder der Lichtreflexion in Abhängigkeit von einem Lichteinfall auf das Kraftfahrzeug gelöst.

Der Erfindung liegt der Gedanke zugrunde, an Stelle eines statischen Schattens eines simulierten mechanischen Elements, d.h. eines in einer festen räumlichen Beziehung zum simulierten mechanischen Element befindlichen Schattens mit einer unveränderlichen Schattenintensität bzw. an Stelle einer statischen Lichtreflexion mit einer festen Position und unveränderlichen Intensität, einen vom tatsächlichen Lichteinfall abhängigen variablen Schatten bzw. eine vom tatsächlichen Lichteinfall abhängige variable Lichtreflexion elektronisch auf der Anzeige darzustellen.

Bei dem abgebildeten oder simulierten Schatten handelt es sich vorzugsweise um denjenigen Schatten, der bedingt durch den Lichteinfall von der Sonne von einem mit dem simulierten Element im Wesentlichen identischen mechanischen Element eines entsprechenden dreidimensionalen analogen Anzeigeinstruments auf eine umgebende Oberfläche der Anzeige geworfen würde, jedoch ist es natürlich auch möglich, eine Schattierung des mechanischen Elements selbst zu verändern.

Gemäß einer bevorzugten Ausgestaltung der Erfindung umfassen die Mittel zur Veränderung der Darstellung des Schattenwurfs oder der Lichtreflexion Mittel zur Veränderung der Intensität des Schattenwurfs oder der Lichtreflexion in Abhängigkeit von einer Lichtintensität des Lichteinfalls auf das Kraftfahrzeug. Diese Mittel weisen vorzugsweise mindestens einen Fotosensor zur Messung der Lichtintensität des Lichteinfalls auf, dessen Sensorfläche zweckmäßig im Wesentlichen dieselbe Ausrichtung wie die Anzeige besitzt.

Darüber hinaus umfassen die Mittel zur Veränderung der Darstellung des Schattenwurfs oder der Lichtreflexion bevorzugt auch Mittel zur Veränderung der Größe, Form und/oder Ausrichtung des Schattenwurfs in Bezug zur Darstellung des mechanischen Elements oder zur Veränderung der Größe, Form und/oder Ausrichtung der Lichtreflexion in Abhängigkeit von einer Einfallsrichtung des Lichteinfalls auf das Kraftfahrzeug. Diese Mittel dienen zweckmäßig dazu, einerseits die Ausrichtung und Länge des Schattenwurfs oder der Lichtreflexion an einen Neigungswinkel des Lichteinfalls in Bezug zu einer Fahrbahnoberfläche in einer zur Fahrbahnoberfläche senkrechten vertikalen Ebene anzupassen und andererseits die Ausrichtung des Schattenwurfs an den jeweiligen Winkel zwischen der Fahrtrichtung einerseits und der Richtung des Lichteinfalls andererseits in einer zur Fahrbahnoberfläche parallelen horizontalen Ebene anzupassen.

Da es sich bei dem Lichteinfall auf das Fahrzeug überwiegend um den Lichteinfall von der Sonne handelt, sind vorzugsweise Mittel vorgesehen, mit denen der Neigungswinkel des Lichteinfalls in einer vertikalen Ebene unter Zugrundelegung von örtlichen und kalendarischen Sonnenstandsdaten aus der augenblicklichen Position des Fahrzeugs sowie aus dem augenblicklichen Datum und der augenblicklichen Uhrzeit berechnet werden kann.

Zur Ermittlung des Winkels zwischen der Fahrtrichtung und der Richtung des Lichteinfalls in einer horizontalen Ebene können die Mittel zweckmäßig einen oder mehrere Fotosensoren mit unterschiedlich ausgerichteten vertikalen Sensorflächen umfassen, von denen die Intensität des jeweiligen Lichteinfalls gemessen wird, sowie eine Auswerteeinrichtung zur Berechnung der ungefähren Lichteinfallsrichtung in Bezug zur Fahrtrichtung aus den von den Fotosensoren ermittelten Lichtintensitäten.

Ein bevorzugtes Mittel zur Ermittlung von sowohl der Lichtintensität des einfallenden Lichts als auch des Neigungswinkels des Lichteinfalls in einer vertikalen und in einer horizontalen Ebene, das letztere in Bezug zur Fahrtrichtung des Fahrzeugs, ist ein Sonnensensor, wie er zur Steuerung von Klimaanlagen von Kraftfahrzeugen verwendet wird.

### Kurze Beschreibung der Zeichnungen

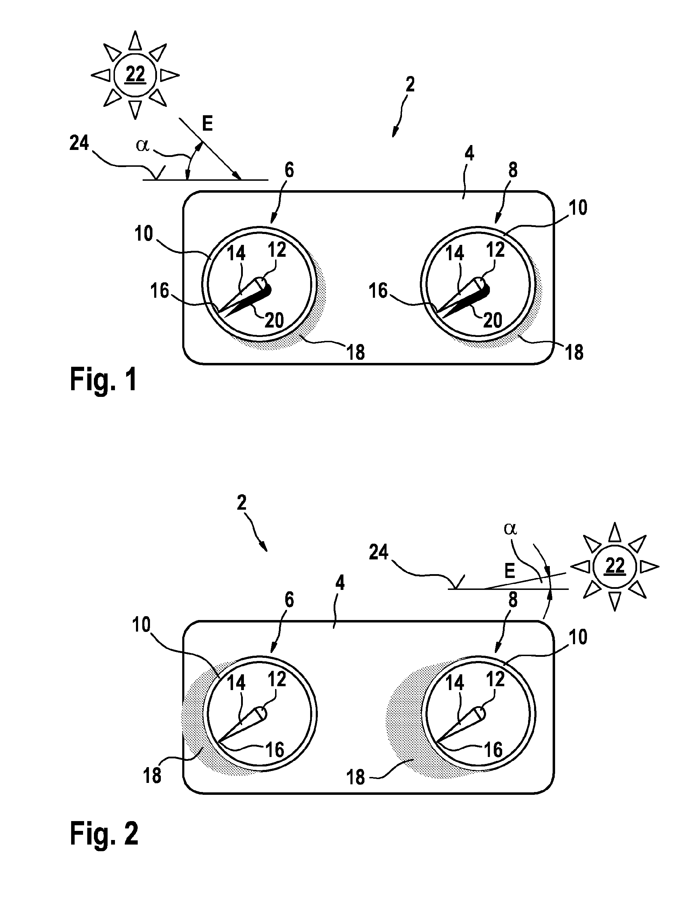

Im folgenden wird die Erfindung anhand eines in der Zeichnung dargestellten Ausführungsbeispiels näher erläutert. Es zeigen
Fig. 1 und 2 Vorderseitenansichten eines Kombinationsinstruments eines Kraftfahrzeugs mit zwei Anzeigeinstrumenten bei unterschiedlichen Lichteinfallbedingungen.

### Ausführungsform der Erfindung

Das in der Zeichnung in Vorderseitenansicht schematisch dargestellte Kombinationsanzeigeinstrument 2 eines Kraftfahrzeugs besitzt eine frei programmierbare Anzeige 4 in Form eines Farbdisplays, beispielsweise eines LCD-Displays, auf der nach dem Einschalten einer Zündung des Kraftfahrzeugs fahrerrelevante Informationen angezeigt werden, wie zum Beispiel die Drehzahl eines Antriebsmotors des Kraftfahrzeugs und die augenblickliche Fahrtgeschwindigkeit des Kraftfahrzeugs.

Die Anzeige der Drehzahl und der Fahrtgeschwindigkeit erfolgt mittels zweier nebeneinander auf der Anzeige 4 abgebildeter Anzeigeinstrumente 6, 8. Bei der Abbildung der Anzeigeinstrumente 6, 8 handelt es sich um eine Darstellung, die durch Ansteuerung des Farbdisplays mittels einer geeigneten Software auf elektronischem Wege auf der Anzeige 4 erzeugt wird. Die durch die Software festgelegte Darstellung der beiden Anzeigeinstrumente 6, 8 zeigt dabei Nachbildungen konventioneller analoger Zeigerinstrumente, nämlich einer konventionellen analogen Drehzahlanzeige und eines analogen Tachometers, die jeweils als dreidimensionale Abbildung dargestellt sind. Die Darstellung der Anzeigeinstrumente 6, 8 umfasst dabei die Darstellung einer ringförmigen erhabenen Einfassung 10 und die Darstellung eines innerhalb der Einfassung 10 angeordneten drehbaren Zeigers 14, der einseitig über eine zur Einfassung 10 koaxiale Achse 12 übersteht und sich zu einer Spitze 16 verjüngt.

Um der Darstellung der Einfassung 10 und des Zeigers 14 eine größere räumliche Tiefe zu verleihen, werden neben der Abbildung der Einfassung 10 und des Zeigers 14 auf der Anzeige 4 auch Schatten 18, 20 abgebildet, die denjenigen Schatten entsprechen, welche bei einem realen analogen Anzeigeinstrument mit einer entsprechenden Einfassung und einem entsprechenden Zeiger infolge des Einfalls von Sonnenlicht auf einer ebenen, die Einfassung umgebenden und unter dem Zeiger angeordneten Oberfläche erzeugt würden. Ebenso wie bei den Abbildungen der Anzeigeinstrumente 6, 8 und von deren mechanischen Elementen 10, 14 handelt es sich auch bei den Abbildungen der Schatten 18, 20 um elektronisch durch die Software erzeugte Darstellungen, deren Helligkeit zur Erzeugung des Eindrucks eines Schattens um ein bestimmtes Maß gegenüber der Helligkeit benachbarter Bereiche auf der Anzeige 4 verringert wird.

Um eine möglichst realitätsnahe grafische Darstellung der Anzeigeinstrumente 6, 8 auf der Anzeige 4 und damit eine möglichst gute Anmutung zu erzielen, erfolgt die Abbildung der Schatten 18, 20 nicht statisch, d.h. nicht in einer festen räumlichen Beziehung zu dem zugehörigen Anzeigeelement 10, 14 und mit einer gleichbleibenden Helligkeit, sondern in Abhängigkeit vom Lichteinfall des Sonnenlichts auf das Fahrzeug. Dadurch soll zum einen erreicht werden, dass der elektronisch erzeugte Schatten 18, 20 der Anzeigeelemente 10, 14 auf der Anzeige 4 im Hinblick auf Intensität und Bewegungsverhalten im Wesentlichen dem realen Schattenwurf benachbarter Bauteile auf einer Instrumententafel des Kraftfahrzeugs entspricht und somit bei einem Betrachter kein irrealer Eindruck entsteht. Zum anderen soll erreicht werden, dass die Schatten beweglicher Elemente, wie der Zeiger 14 der beiden Anzeigeinstrumente 6, 8, im Zuge einer Bewegung des jeweiligen Elements 14 entsprechend der dadurch verursachten Veränderung des Lichteinfalls ebenfalls seine Form und Ausrichtung verändert.

Dazu wird erstens die Form und Ausrichtung des Schattens 18, 20 in Abhängigkeit von der Einfallsrichtung E des Lichts der Sonne 22 verändert, die zum einen in vertikaler Richtung durch den Neigungswinkel α der Richtung E in Bezug zu einer horizontalen Fahrbahnoberfläche 24 und zum anderen in horizontaler Richtung durch den Winkel zwischen der Fahrtrichtung des Fahrzeugs und der Azimutrichtung der Sonne beeinflusst wird.

Zweitens wird auch die Intensität der Schatten 18, 20, d.h. die im Vergleich zu benachbarten, außerhalb der Schatten 18, 20 gelegenen Bereiche der Anzeige 4 dunklere Farb- oder Helligkeitsstufe der Schatten 18, 20 in Abhängigkeit von der Intensität des auf das Fahrzeug einfallenden Sonnenlichts verändert, indem man bei hoher Intensität der Sonneinstrahlung eine dunklere Abbildung als bei niedriger Intensität wählt.

Drittens wird bei beweglichen Elementen, wie dem Zeiger 14, deren Bewegung bei der Berechnung der Form, Größe und/oder Ausrichtung ihres Schattens 20 mitberücksichtigt, so dass der Schatten 20 seine Form, Größe und/oder Ausrichtung verändert, wenn er zusammen mit der Darstellung des beweglichen Elements 14 über die Anzeige 4 wandert.

Zum Beispiel wird bei links vom Fahrzeug befindlicher hoch stehender Sonne 22 rechts unterhalb von der ringförmigen Einfassung 10 und vom Zeiger 14 der Instrumente 6, 8 ein kurzer Schatten 18, 20 mit intensiver Dunkelfärbung abgebildet, wie in Fig. 1 dargestellt, während bei rechts vom Fahrzeug befindlicher niedrig stehender Sonne 22 links unterhalb von der ringförmigen Einfassung 10 ein längerer Schatten 18 mit schwächerer Dunkelfärbung abgebildet wird, wie in Fig. 2 dargestellt. Da sich der Zeiger 14 in Fig. 1 und 2 gerade in einer Stellung befindet, in der er nahezu entgegengesetzt zur Einfallsrichtung E des Sonnenlichts in Fig. 2 ausgerichtet ist, wird in Fig. 2 neben dem Zeiger 14 kein Schatten 20 dargestellt.

Zur Ermittlung der Einfallsrichtung und der Intensität des Sonnenlichts ist am Fahrzeug eine Sensoranordnung (nicht dargestellt) angebracht, die einen oder mehrere Fotosensoren mit unterschiedlich ausgerichteten Sensorflächen umfasst. Die Sensoranordnung ist mit einer Steuerung (nicht dargestellt) der Anzeige 4 verbunden, in der die Signale von der Sensoranordnung ausgewertet werden.

Vorzugsweise wird ein einziger Sensor in Form eines Sonnensensors einer Kraftfahrzeug-Klimaanlage verwendet, der die Intensität des Lichteinfalls sowie den Neigungswinkel des Lichteinfalls in einer vertikalen Ebene und den Lichteinfallswinkel in Bezug zur Fahrtrichtung des Kraftfahrzeugs in einer horizontalen Ebene misst.

Bei Sensoren mit mehreren Sensorflächen dient eine der Sensorflächen, vorzugsweise eine zur Anzeige 4 parallele Sensorfläche, zur Messung eines Absolutwerts der augenblicklichen Intensität des Sonnenlichts, der als Soll-Wert zur Steuerung der Intensität des Schattens 18, 20 der Darstellungen der Elemente 10, 14 dient.

Eine Gruppe von weiteren Sensorflächen ist senkrecht zur Fahrbahnoberfläche 24 ausgerichtet, wobei die Sensorflächen dieser Gruppe in unterschiedliche horizontale Richtungen weisen, so dass der Neigungswinkel der Einfallsrichtung des Sonnenlichts in einer vertikalen Ebene in Bezug zu sämtlichen dieser Sensorflächen derselbe ist. Dies gestattet es, aus der Intensität des auf verschiedene Sensorflächen dieser Gruppe einfallenden Sonnenlichts Relativwerte der Lichtintensität zu berechnen. Aus diesen Relativwerten lässt sich in Kenntnis der paarweise von den Sensorflächen eingeschlossenen Winkel die ungefähre Einfallsrichtung des Sonnenlichts in einer zur Fahrbahnoberfläche parallelen horizontalen Ebene bestimmen. Da sich die Ausrichtung der Sensorflächen in Bezug zur Fahrtrichtung nicht verändert, kann daraus auch der ungefähre Lichteinfallswinkel bestimmt werden, der in dieser horizontalen Ebene zwischen der Einfallsrichtung des Sonnenlichts und der Fahrtrichtung des Fahrzeugs eingeschlossen wird. Die Sensorflächen können zum Beispiel entlang des Umfangs eines Antennenfußes einer auf einem Dach des Fahrzeugs montierten Dachantenne angebracht sein.

Der augenblickliche Neigungswinkel der Sonne, d.h. der Einfallswinkel des Sonnenlichts in einer vertikalen Ebene, wird aus der augenblicklichen, von einem satellitengestützten oder erdgebundenen Navigationsgerät ermittelten Fahrzeugposition, der aktuellen Uhrzeit und aus dem aktuellen Datum bestimmt, indem zum Beispiel aus einer in einem Speicher abgelegten Tabelle mit Neigungswinkeln der Sonne in Abhängigkeit von Position, Datum und Uhrzeit für die auf einer Uhr des Fahrzeugs eingestellte Uhrzeit- und Datumsangabe der zu dieser Uhrzeit- und Datumsangabe zugehörige Neigungswinkel für die aktuelle Fahrzeugposition entnommen wird. Die Positionsangaben brauchen dabei nur den ungefähren Breiten- und Längengrad umfassen, da sich der Sonnestand mit der geographischen Breite und Länge nur sehr allmählich ändert. Da ähnliches auch für das Datum gilt, macht es keinen großen Unterschied, wenn dieses auf der Uhr des Fahrzeugs nicht ganz korrekt eingestellt ist.

Alternativ kann die Position und die Fahrtrichtung des Fahrzeugs aus Signalen des Navigationsgeräts berechnet werden. Diese Informationen können dann zusammen mit Informationen über den örtlichen und den kalendarischen Sonnenstand benutzt werden, um an der augenblicklichen Position des Fahrzeugs zum einen den Neigungswinkel des augenblicklichen Lichteinfalls E von der Sonne 22 in einer vertikalen Ebene und zum anderen den Lichteinfallswinkel zwischen der ebenfalls vom Navigationsgerät gelieferten Fahrtrichtung und der Einfallsrichtung E des Sonnenlichts in einer horizontalen Ebene zu berechnen.

Zur Auswertung der Signale vom Navigationsgerät und der Uhr sind diese ebenfalls mit der Steuerung (nicht dargestellt) der Anzeige 4 verbunden.

Zwischen den beiden Anzeigeinstrumenten 6, 8 kann bei Bedarf, d.h. zum Beispiel durch Betätigung eines Schalters am Lenkrad, ein Auswahlmenü auf der Anzeige 4 abgebildet werden, aus dem der Fahrer durch weitere Betätigung des Schalters einen Menüpunkt, wie beispielsweise Wartung, Uhr, Wetter, Audio, Navigation, Telefon, usw. auswählen kann, um dann zu dem ausgewählten Menüpunkt weitere Informationen zu erhalten, wie zum Beispiel unter dem Menüpunkt Wartung den Zeitpunkt der nächsten fälligen Inspektion und den Ölfüllstand des Antriebsmotors bzw. unter dem Menüpunkt Uhr das augenblickliche Datum und die aktuelle Uhrzeit. Die Anzeige dieser Informationen erfolgt in einer für frei programmierbare Anzeigen üblichen Art und Weise und soll daher hier nicht näher beschrieben werden.

Außer bei Kraftfahrzeugen können die zuvor beschriebenen Anzeigeinstrumente auch bei anderen Fahrzeugen eingesetzt werden, bei denen sich der Lichteinfall aus der Umgebung verändert, zum Beispiel bei Wasser- oder Luftfahrzeugen.

## Patentansprüche

1. Anzeigeinstrument für ein Fahrzeug, mit einer frei programmierbaren Anzeige, umfassend mindestens eine elektronisch auf der Anzeige abgebildete Darstellung eines mechanischen oder körperlichen Elements, wie eines Zeigers oder Rahmens, sowie eine elektronisch auf der Anzeige abgebildete Darstellung eines Schattens des mechanischen oder körperlichen Elements oder mindestens einer Lichtreflexion, wobei die Darstellung des Schattens veränderbar ist, **gekennzeichnet durch** Mittel zur Veränderung der Darstellung des Schattens (28, 20) oder der Lichtreflexion in Abhängigkeit von einem Lichteinfall auf das Fahrzeug.

2. Anzeigeinstrument nach Anspruch 1, **dadurch gekennzeichnet, dass** die Darstellung des Schattens (18, 20) oder der Lichtreflexion eine elektronische Abbildung eines simulierten Schattens des mechanischen oder körperlichen Elements (10, 14) oder eine elektronische Abbildung einer simulierten Lichtreflexion auf einer das Element (10, 14) umgebenden Oberfläche ist.

3. Anzeigeinstrument nach Anspruch 1 oder 2, **dadurch gekennzeichnet, dass** die Mittel zur Veränderung der Darstellung des Schattens (18, 20) oder der Lichtreflexion Mittel zur Veränderung der Intensität des Schattens (18, 20) oder der Lichtreflexion in Abhängigkeit von einer Lichtintensität des Lichteinfalls auf das Kraftfahrzeug umfassen.

4. Anzeigeinstrument nach einem der vorangehenden Ansprüche, **dadurch gekennzeichnet, dass** die Mittel zur Veränderung der Darstellung des Schattens (18, 20) oder der Lichtreflexion mindestens einen mit einer Steuerung der Anzeige (4) verbundenen Sensor umfassen.

5. Anzeigeinstrument nach Anspruch 4, **dadurch gekennzeichnet, dass** der Sensor ein Sonnensensor einer Kraftfahrzeug-Klimaanlage ist.

6. Anzeigeinstrument nach Anspruch 4, **dadurch gekennzeichnet, dass** der Sensor einen Fotosensor zur Messung der Intensität des Lichteinfalls auf das Kraftfahrzeug umfassen.

7. Anzeigeinstrument nach einem der vorangehenden Ansprüche, **dadurch gekennzeichnet, dass** die Mittel zur Veränderung der Darstellung des Schattens (18, 20) oder der Lichtreflexion Mittel zur Veränderung der Größe, Form und/oder Ausrichtung des Schattens (18, 20) in Bezug zur Darstellung des mechanischen oder körperlichen Elements (10, 14) oder der Größe, Form und/oder Ausrichtung der Lichtreflexion in Abhängigkeit von einer Einfallsrichtung des Lichteinfalls auf das Kraftfahrzeug umfassen.

8. Anzeigeinstrument nach einem der vorangehenden Ansprüche, **dadurch gekennzeichnet, dass** die Mittel zur Veränderung der Darstellung des Schattens (18, 20) oder der Lichtreflexion Mittel zur Veränderung der Größe, Form und/oder Ausrichtung des Schattens (18, 20) in Bezug zur Darstellung des mechanischen oder körperlichen Elements (10, 14) oder der Größe, Form und/oder Ausrichtung der Lichtreflexion in Abhängigkeit von einem Neigungswinkel des Lichteinfalls in Bezug zu einer Fahrbahnoberfläche und in Abhängigkeit von einem Lichteinfallswinkel in Bezug zu einer Fahrtrichtung des Kraftfahrzeug umfassen.

9. Anzeigeinstrument nach Anspruch 8, **dadurch gekennzeichnet, dass** die Mittel zur Veränderung der Größe, Form und/oder Ausrichtung des Schattens (18, 20) in Bezug zur Darstellung des mechanischen oder körperlichen Elements (10, 14) oder der Größe, Form und/oder Ausrichtung der Lichtreflexion in Abhängigkeit vom Neigungswinkel des Lichteinfalls in Bezug zur Fahrbahnoberfläche ein Navigationsgerät und eine Uhr mit Datumsfunktion des Kraftfahrzeugs umfassen, die mit einer Steuerung der Anzeige (4) verbunden sind.

10. Anzeigeinstrument nach Anspruch 8 oder 9, **dadurch gekennzeichnet, dass** die Mittel zur Veränderung der Größe, Form und/oder Ausrichtung des Schattens (18, 20) oder der Lichtreflexion in Abhängigkeit vom Lichteinfallswinkel in Bezug zur Fahrtrichtung des Kraftfahrzeug eine Mehrzahl von Fotosensoren zur Messung der Intensität des Lichteinfalls auf das Kraftfahrzeug umfassen, die mit einer Steuerung der Anzeige (4) verbunden sind.

11. Anzeigeinstrument nach einem der Ansprüche 4 bis 10, **dadurch gekennzeichnet, dass** der Sensor oder mindestens einer der Sensoren eine allgemein parallel zur Anzeige (4) ausgerichtete Sensorfläche aufweist.

12. Anzeigeinstrument nach einem der Ansprüche 4 bis 11, **dadurch gekennzeichnet, dass** Sensorflächen der Sensoren senkrecht zu einer Fahrbahnoberfläche ausgerichtet sind und mit Sensorflächen benachbarter Sensoren einen Winkel einschließen.

13. Kombinationsinstrument für ein Fahrzeug, **dadurch gekennzeichnet, dass** es mehrere Anzeigeinstrumente (6, 8) nach einem der vorangehenden Ansprüche mit einer einzigen frei programmierbaren Anzeige (4) umfasst, auf der mehrere Darstellungen von mechanischen oder körperlichen Elementen (10, 14) mit Schatten (18, 20) abgebildet sind.
